# EUROPÄISCHE PATENTSCHRIFT

(11) **EP 2 415 551 B1**
(45) Veröffentlichungstag und Bekanntmachung des Hinweises auf die Patenterteilung: **06.03.2013**
(21) Anmeldenummer: 10405147.9
(22) Anmeldetag: 02.08.2010
(51) Int. Cl.: B23K 26/08, B23K 26/40, H01L 31/18

(54) **Vorrichtung und Verfahren zum Strukturieren von Halbleiterschichten**
Device and method for structuring of semi-conductive layers
Dispositif et procédé pour structurer des couches semi-conductrices

(43) Veröffentlichungstag der Anmeldung: 08.02.2012
(73) Patentinhaber: Solneva SA, 3270 Aarberg (CH)
(72) Erfinder: Schneeberger, Stefan, 1595 Faoug (CH)
(74) Vertreter: EGLI-EUROPEAN PATENT ATTORNEYS

(56) Entgegenhaltungen:
- EP-A1- 1 925 964
- EP-A1- 2 139 049
- EP-A1- 2 177 302

## Beschreibung

Die Erfindung betrifft das technische Gebiet der Fertigungstechnik und insbesondere eine Strukturierungsvorrichtung für Halbleiterschichten nach Anspruch 1, ein entsprechendes Strukturierungsverfahren nach Anspruch 9 und eine spezifische Verwendung der Vorrichtung nach Anspruch 14.

Eine hochpräzise Strukturierung dünner Halbleiterschichten ist insbesondere bei der Fertigung von Solarmodulen erforderlich. Zum Erreichen hoher Modulwirkungsgrade spielt dabei die prozessintegrierte Serienverschaltung eine wichtige Rolle. Durch die integrierte Serienverschaltung werden die im Modul entstehenden elektrischen Verluste minimiert, wobei durch die Verschaltung ein Teil der energieproduzierenden Zellfläche verloren geht. In einem mehrstufigen Strukturierungsprozess werden die einzelnen Schichten eines Solarmoduls nach deren jeweiliger Deposition gezielt unterbrochen, so dass am Ende eine Serienverschaltung einzelner Solarzellen entsteht. Das Stromniveau in den leitenden Schichten wird hierdurch reduziert und die ohmschen Verluste in den Kontaktschichten nehmen ab. Um die Flächenverluste gering zu halten, muss die Verschaltung auf möglichst engem Raum stattfinden. Dazu wird die Verschaltung der Module ausschließlich durch Ablationsprozesse vorgenommen. Aufgrund der guten Fokussierbarkeit von Laserlicht kann die Grösse der abladierten Bereiche klein gehalten werden. Ein weiterer Vorteil, den die Lasertechnologie bietet, sind die hohe Zuverlässigkeit und das hohe Maß an Automatisierbarkeit.

Die Qualität und Stabilität von Dünnschicht-Solarmodulen wird stark von der Strukturierung beeinflusst. Bei einer nicht ausreichenden Strukturierungsqualität kann es zu Ausfällen von ganzen Solarmodulen kommen. Eine besonders gleichmässige Strukturierung der Module in einzelne Zellen wird heute dadurch erreicht, dass der Laser in einem gewünschten, gleichbleibenden Abstand zu einer bereits geschnittenen Referenzspur geführt wird. Dazu wird diese Spur üblicherweise optisch detektiert und der Laser entsprechend nachgeführt. Die dafür eingesetzten Bilderkennungssysteme sind allerdings technisch aufwendig und teuer, sowie anfällig für störende Einflüsse aus dem Ablationsprozess und erfordern einen hohen Wartungsaufwand.

Es ist Aufgabe der vorliegenden Erfindung, eine verbesserte Strukturierungsvorrichtung für Solarmodule anzugeben, die einfach aufgebaut ist, die flexibel einsetzbar ist und auch unter erschwerten Prozessbedingungen zuverlässig und genau arbeitet, und die darüber hinaus kostengünstig herstellbar und betreibbar ist.

Diese Aufgabe wird durch eine Strukturierungsvorrichtung nach Anspruch 1 gelöst. Ein wesentlicher Punkt der Erfindung besteht dabei darin, dass wenigstens ein kapazitiver und/oder induktiver Sensor zur Spurerkennung vorgesehen ist. Ablatiertes Material oder sonstige, ein bilderkennendes System störende Einflüsse aus dem Strukturierungsprozess wie Lichtreflexionen und Glasspiegelungen werden damit zuverlässig ausgeschlossen. Zudem geht das erfindungsgemässe Verfahren über die bisherigen Möglichkeiten der Bilderkennung hinaus, denn die induktive bzw. kapazitive Sensorik lässt auch die sichere Erkennung von Spuren zu, die bereits im Material liegen und von aussen gar nicht mehr erkennbar sind. Die Unempfindlichkeit dieser Spurerkennung macht es auch grundsätzlich unerheblich, welches Strukturierungswerkzeug verwendet wird, d.h. ob ein Laser oder ein anderes geeignetes - möglicherweise Späne produzierendes - Werkzeug zum Einsatz kommt. Gleichzeitig steht eine Vorrichtung zur Verfügung, die im Vergleich zu bekannten Systemen äusserst einfach und kostengünstig aufgebaut ist. Das Werkzeug kann dabei der Einfachheit halber mechanisch mit dem Sensor gekoppelt werden, um dessen Bewegung zu folgen. Denkbar ist aber grundsätzlich auch, eine elektronische Spursteuerung des Werkzeugs in Abhängigkeit von dem Sensor vorzusehen.

Ein induktiver Sensor arbeitet mit einem hochfrequenten Schwingkreis, der mittels einer Spule an der aktiven Sensorfläche ein elektromagnetisches Wechselfeld erzeugt. Nähert sich ein Metallgegenstand diesem Feld, so kommt es im Schwingkreis zu einer Bedämpfung. Diese Bedämpfung hängt von der Form-, Lage-, und/oder Feldstärkenänderung des elektromagnetischen Felds ab, die durch eine Abweichung des Sensors von einer Referenzspur an oder in dem Solarmodul entsteht. Überschreitet die Bedämpfung des Schwingkreises einen Schwellenwert, wird ein Schaltsignal generiert, z.B. unter Verwendung eines Schmitt-Triggers.

Mit einem kapazitiv arbeitenden Sensor können nicht nur metallische, sondern auch nicht-metallische Gegenstände detektiert werden. Ein kapazitiver Sensor arbeitet dabei mit einem hochfrequenten Schwingkreis, der mittels eines Kondensators an der aktiven Sensorfläche ein elektrisches Feld erzeugt. Nähert sich ein fester oder flüssiger Stoff diesem Feld, so kommt es zu einer Kapazitätsänderung und damit im Schwingkreis zu einer Veränderung der Verstärkung. Diese Verstärkung hängt ebenfalls von einer Form-, Lage-, oder Feldstärkenänderung des magnetischen Felds ab, die durch eine Abweichung des Sensors von einer Referenzspur in dem Solarmodul entsteht. Überschreitet die Verstärkung einen Schwellenwert, wird ein Schaltsignal generiert, gleichfalls z.B. unter Verwendung eines Schmitt-Triggers.

Vorteilhafte Ausführungsformen der Strukturierungsvorrichtung sind in den Unteransprüchen angegeben.

In einer vorteilhaften Ausführungsform ist es vorgesehen, dass der wenigstens eine Sensor linear verfahrbar ist, und die Spurführungseinheit ausgebildet ist, basierend auf einer Abweichung der Referenzspur von einem Sensor Steuersignale zum Rückführen des Strukturierungswerkzeugs auf den seitlichen Abstand zur Referenzspur zu erzeugen. Die lediglich in eine lineare Richtung erforderliche Verfahrbarkeit des einen oder der mehreren Sensoren lässt dabei einen besonders einfachen Aufbau der Vorrichtung zu. Verändert sich beim linearen Verfahren des oder der Sensoren die Lage der Spur zu den Sensoren, wird dem Strukturierungswerkzeug signalisiert, wie es sich zu bewegen hat, um den gleichen Abstand zu der Spur einzuhalten. Das Strukturierungswerkzeug muss dazu in einer Ebene beweglich gelagert sein, um einerseits einer Linearbewegung des oder der Sensoren zu folgen und andererseits eine veränderte Spurlage auszugleichen. Zur Erkennung der Spurlage kann ein Feld oder eine Reihe von Sensoren vorgesehen sein, abhängig z.B. davon, welche qualitätsabhängigen Spurvarianzen oder auch welche bewusst gewählte Spurführung vorliegen. Eine besonders effiziente Erkennung der Spurlage ist aber dadurch möglich, dass Sensoren in einer Linie angeordnet sind, die in einem Winkel zu deren linearer Verfahrrichtung verläuft. Im einfachsten Fall sind die Sensoren dabei in einer Linie angeordnet, die senkrecht zu deren Verfahrrichtung verläuft. Sie können aber auch in einer schrägen Linie zur Verfahrrichtung, also hintereinander und versetzt zueinander angeordnet sein, um senkrecht zur Verfahrrichtung eine dichtere Sensorbelegung zu erzielen. Dadurch kann die Genauigkeit der Spurerkennung erheblich erhöht werden. Gleichzeitig können günstigere Sensoren mit grösseren Gehäuseabmassen gewählt werden, da deren Grösse eine enge Packung der Sensoren in schräger Linie nicht behindert.

Eine besonders hochwertige Strukturierung wird dadurch erreicht, wenn das Strukturierungswerkzeug dem wenigstens einen Sensor nachgeführt ist, und die Spurführungseinheit ausgebildet ist, Abweichungen von der Referenzspur zu korrelieren. Das Werkzeug kann damit sozusagen vorausschauend geführt werden, weil kommende Abweichungen der Referenzspur zur Führung des Werkzeugs herangezogen werden können. Die Korrelation dieser kommenden Abweichungen lässt z.B. die Berechnung einer im Vergleich zur Referenzspur geglätteten Schnittspur zu. Insbesondere lassen sich dadurch sprunghafte Abweichungen der Referenzspur ausgleichen.

In einer weiteren vorteilhaften Ausführungsform ist es vorgesehen, dass der wenigstens eine Sensor in einer Ebene verfahrbar ist, wobei das Strukturierungswerkzeug einer Bewegung des Sensors folgt, und die Spurführungseinheit ausgebildet ist, basierend auf einer Abweichung eines Sensors von der Referenzspur Steuersignale zum Rückführen des Sensors auf diese Spur zu erzeugen. Das Werkzeug kann dabei mechanisch fest oder elektromechanisch gesteuert mit dem Sensor gekoppelt sein, um dessen Bewegungen nachzuvollziehen. Die ebene Beweglichkeit des oder der Sensoren ermöglicht dabei deren Nachführen an jeder Art von Referenzspur. Ganz gleich welche Spurführung diese aufweist, kann sie sozusagen nicht aus dem Blickfeld des oder der Sensoren verschwinden. Insbesondere werden dadurch auch Strukturierungen von Modulen möglich, die keinen geraden, sondern auch anforderungsgemäss kurvige Schnitte erfordern.

In jeder der vorstehenden Ausführungsformen ist es bevorzugt, dass die Spurführungseinheit zudem ausgebildet ist, Signale mehrerer Sensoren zum Erkennen einer Abweichung von der Spur zu korrelieren. Dadurch stehen nicht nur einzelne Signaländerungen zur Auswertung zur Verfügung, sondern auch deren Unterschiede und/oder Änderungen untereinander. Abhängig von der Abweichung der Sensoren von der Spur sowie Geometrie- bzw. Materialunterschieden des Moduls ist dabei eine Abweichung der Sensoren von einer Referenzspur nach Betrag und Richtung besonders genau erkennbar. Zudem werden weitere logische Schaltelemente wie z.B. ein Schmitt-Trigger überflüssig.

In einer weiteren vorteilhaften Ausführungsform sind das Strukturierungswerkzeug und der wenigstens eine Sensor gegenläufig zueinander ausgerichtet. Dadurch kann z.B. durch eine Glasseite des Moduls hindurch gelasert werden, während die bereits vorhandene Referenzspur von der Strukturseite des Moduls her erkannt wird. Dadurch wird eine besonders genaue und gleichmässige Spurerzeugung möglich, da das abladierte Material ungehindert entweichen kann.

Zur Herstellung unterschiedlichster Solarmodule ist es von Vorteil, wenn der Abstand zwischen dem Strukturierungswerkzeug und dem wenigstens einen Sensor einstellbar ist. Damit kann im Prinzip jede anforderungsgemässe Strukturierung eines Moduls durch entsprechende Voreinstellung des Abstands in hoher Güte hergestellt werden.

Die vorstehende Aufgabe wird auch durch ein Verfahren nach Anspruch 9 gelöst, das eine besonders einfache, zuverlässige und flexible Strukturierung von Solarmodulen zulässt.

Vorteilhafte Ausprägungen des Verfahrens sind in den Unteransprüchen angegeben.

In einer bevorzugten Ausprägung des Verfahrens ist dabei vorgesehen, dass der wenigstens eine Sensor linear verfahren und das Strukturierungswerkzeug auf den eingestellten seitlichen Abstand von der Referenzspur rückgeführt wird. Ein solches Verfahren ist besonders einfach ausführbar, da lediglich das Werkzeug in einer Ebene verfahrbar gelagert sein muss, der oder die Sensoren dagegen nur linear geführt zu sein brauchen. Zur besonders guten Erkennbarkeit der Spur können dabei Felder oder Reihen einzelner Sensoren vorgesehen sein, deren Signale entsprechend ausgewertet werden.

In einer weiteren bevorzugten Ausprägung des Verfahren ist vorgesehen, dass der wenigstens eine Sensor auf die Referenzspur rückgeführt wird, und das Strukturierungswerkzeug der Bewegung des wenigstens einen Sensors folgt. Dadurch wird es möglich, Referenzspuren mit grösseren Abweichungen von einer geraden Linie sicher zu folgen. Insbesondere werden auch Strukturierungen mit anforderungsgemäss gekrümmten oder winkligen Referenzspuren möglich. Letztere wären über die Verwendung eines Felds mit einer oder mehreren Reihen und Spalten von Sensoren erkennbar, deren Signale entsprechend auszuwerten wären.

In jeder der vorstehenden Ausprägungen des Verfahrens ist es bevorzugt, das Strukturierungswerkzeug dem Sensor nachzuführen, und die Signale des wenigstens einen Sensors zum Führen des Strukturierungswerkzeugs zu korrelieren. Dadurch wird eine im Vergleich zur Referenzspur geglättete Schnittspur des Werkzeugs möglich, was eine qualitativ hochwertige Strukturierung von Solarmodulen zulässt.

Zusätzlich oder alternativ kann auch vorgesehen sein, dass die Signale mehrerer Sensoren zum Erkennen einer Abweichung von der Spur korreliert werden, d.h. deren Unterschiede und/oder Änderungen. Dadurch ist eine besonders genaue Erkennung der Abweichung des Sensors von der Referenzspur möglich, was eine besonders exakte Strukturierung von Solarmodulen ermöglicht.

Die erfindungsgemässe Strukturierungsvorrichtung soll dabei bevorzugt zur Herstellung einer P1-, P2- und P3-Schicht von Solarmodulen Verwendung finden.

Die Erfindung wird im Folgenden anhand von Ausführungsbeispielen unter Bezugnahme auf die beigefügten Figuren im Detail erläutert. Gleiche oder gleichwirkende Teile sind mit gleichen Bezugsziffern versehen. Es zeigen:
- Figuren 1A-1H: Prozessschritte P1, P2 und P3 zum Strukturieren eines Solarmoduls, bei dem die erfindungsgemässe Vorrichtung zum Einsatz kommt;
- Figur 2: die Funktionsweise der Spurerkennung mit einer ersten erfindungsgemässen Spurführungseinheit auf Basis eines Sensors an einer diesem Sensor abgewandten Spur;
- Figur 3: die Funktionsweise der Spurerkennung mit einer zweiten erfindungsgemässen Spurfüh- rungseinheit auf Basis von zwei Sensoren an einer den Sensoren abgewandten Spur;
- Figur 4: die Funktionsweise der Spurerkennung mit der erfindungsgemässen Spurführungseinheit der Figur 2 an einer dem Sensor zugewandten Spur, und
- Figur 5: ein Blockschaltbild einer erfindungsgemässen Strukturierungsvorrichtung, basierend auf der Spurerkennung der Figur 2.

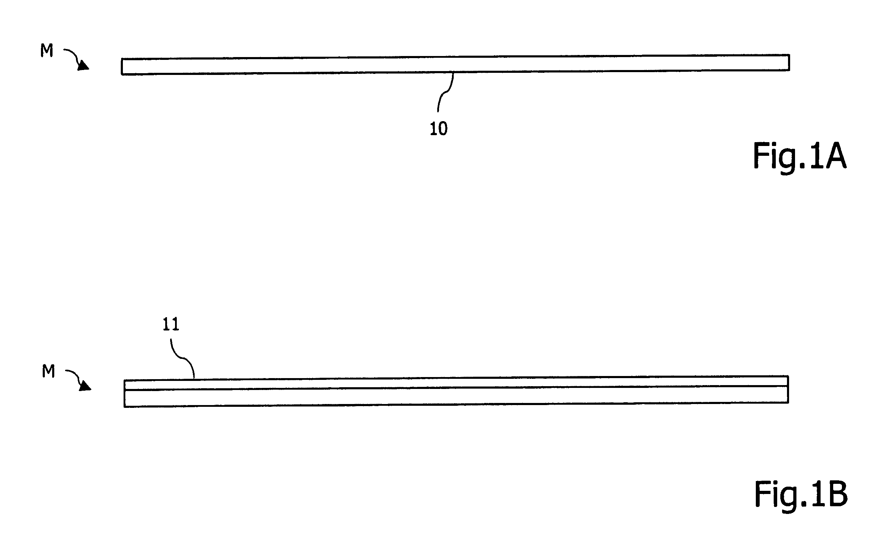

Die Figuren 1A-1H zeigen Prozessschritte P1, P2 und P3 zum Strukturieren eines Solarmoduls M, bei dem die erfindungsgemässe Vorrichtung zum Einsatz kommt.

In der Figur 1A ist zunächst eine Glassschicht 10 gezeigt, die mit einer metallischen Schicht 11 wie z.B. aus einem ZnO- oder SnO2-Material versehen wird, wie aus der Figur 1B ersichtlich ist.

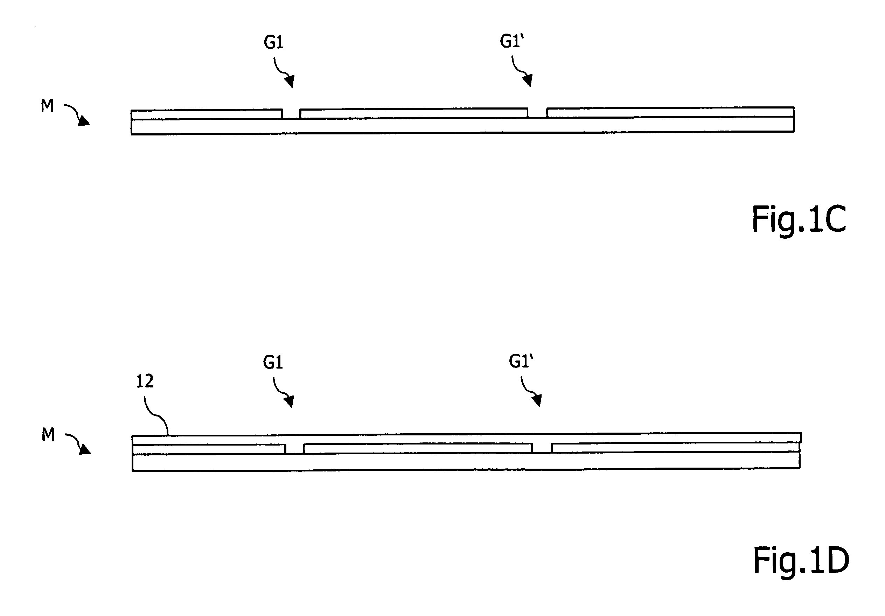

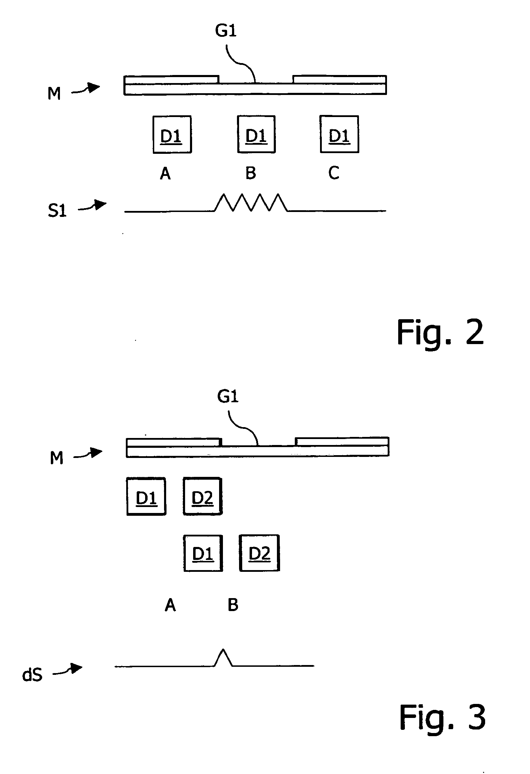

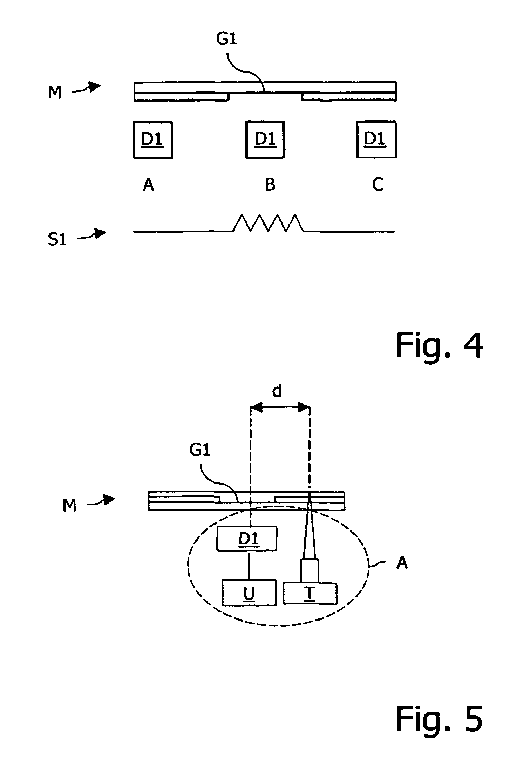

Diese Metallschicht 11 wird gemäss Figur 1C in einem ersten Prozessschritt P1 mit parallelen Spuren G1 und G1' versehen, welche durch einen Laser (nicht gezeigt) angebracht werden, dessen Lichtstrahl der Wellenlänge 1064 nm die Glasschicht 10 von unten nach oben durchtritt. Ist die erste Spur G1 angebracht, wird der Laser zum Schneiden der Spur G1' in einem gewünschten Abstand parallel zu der Referenzspur G1 geführt. Dabei wird die Spur G1 durch einen kapazitiven und/oder induktiven Sensor (dargestellt in Figuren 2-4) erkannt und Abweichungen des Sensors durch die erfindungsgemässe Spurführungseinheit U (gezeigt in Figur 5) korrigiert. Der mit dem Sensor entweder mechanisch oder elektronisch gekoppelte Laser wird entsprechend der Bewegung des Sensors nachgeführt, so dass die Spuren G1 und G1' exakt parallel zueinander verlaufen. Abladiertes Material aus der Spur G1 hat dabei keinen Einfluss auf die Genauigkeit der Spurführung, da hier kein bilderkennendes Verfahren verwendet wird.

Wie in Figur 1D erkennbar ist, wird auf die derart gestaltete Strukturfläche des entstehenden Moduls M eine Absorbtionsschicht 12 aufgebracht, welche die Spuren G1 und G1' auffüllt. Diese Schicht 12 kann aus einem a-SI-, Si/mc-Si-Material oder aus anderen halbleitenden Schichten bestehen.

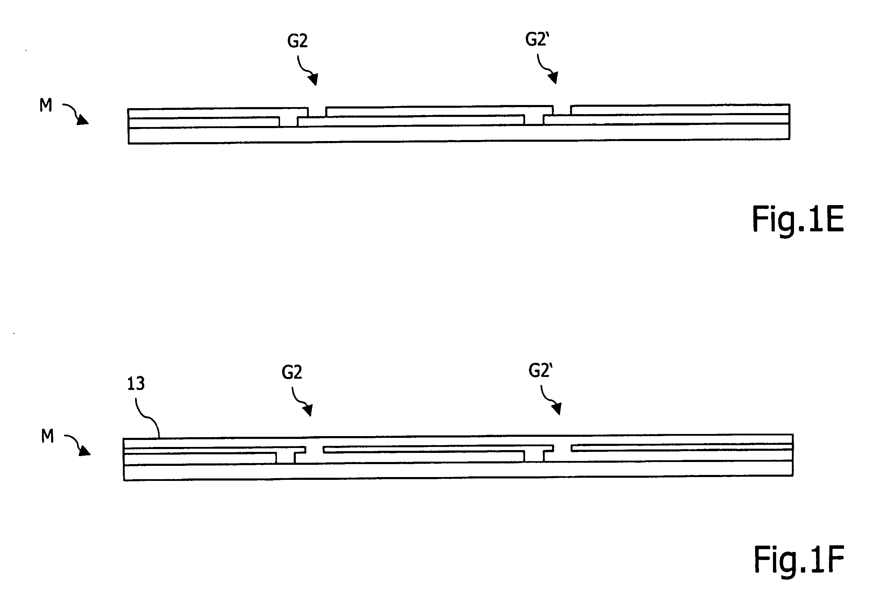

In einem zweiten Prozessschritt P2 werden auf die gleiche Weise wie vorstehend beschrieben weitere Spuren G2 und G2' angebracht, wozu ein Laser mit einer Wellenlänge von 532 nm verwendet wird. Die Lage dieser Spuren G2 und G2' ist aus Figur 1E ersichtlich. Als Referenzspur zum Anbringen der Spuren G2 bzw. G2' werden dabei die schon zuvor angebrachten und nun im Material liegenden Spuren G1 bzw. G1' herangezogen, die von dem kapazitiven und/oder induktiven Sensor erkannt werden. Bei Abweichungen des Sensors von diesen Spuren G1 und G1' verändert sich dessen elektromagnetisches und/oder magnetisches Feld in Form, Lage und/oder Stärke, da es seitlich der Spuren G1 und G1' auf eine andere Materialstruktur trifft als die im Bereich der Referenzspuren G1 und G1' vorhandene. Dies führt zu einer Bedämpfung bzw. Kapazitätsänderung der Sensoren, aus denen der Spurführungseinheit U ein Betrag und eine Richtung errechenbar ist, in welcher der Sensor und damit auch der parallel geführte Laser wieder zurückführbar ist.

Wie aus Figur 1F ersichtlich ist, wird nachfolgend eine Oxidschicht 13 aufgetragen, die wiederum die Spuren G2 und G2' auffüllt. Diese Schicht kann aus einem ZnO oder ZnO/Ag-Material bestehen.

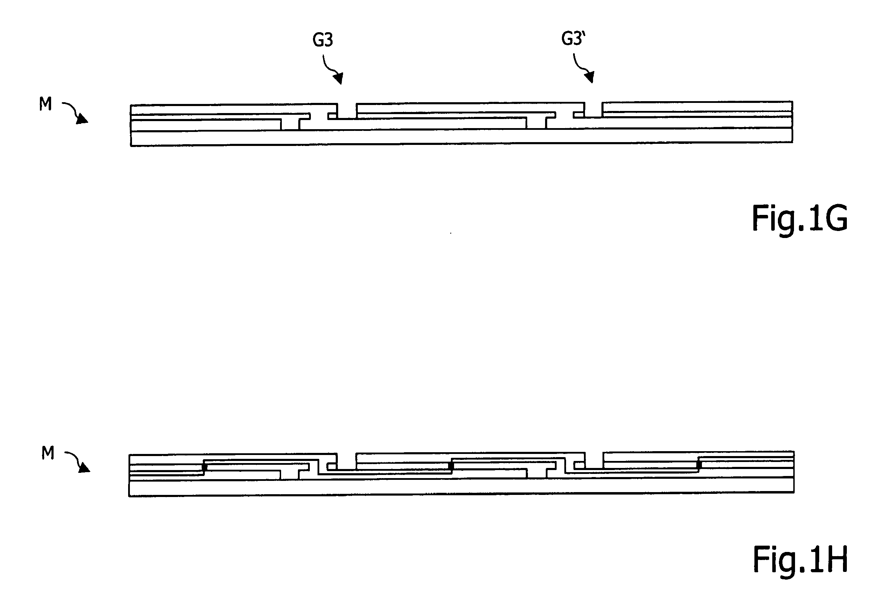

In einem abschliessenden Prozessschritt P3 wird nun sowohl die Schicht 12 wie auch 13 strukturiert, in dem wie vorstehend beschrieben Spuren G3 und G3' angebracht werden, wozu wiederum ein Laser mit Wellenlänge 532 nm verwendet wird. Die Spuren G3 und G3' sind in Figur 1G gezeigt. Als Referenz für diese Spuren G3 bzw. G3' können dabei entweder die Spuren G1 bzw. G1' und/oder die Spuren G2 bzw. G2' herangezogen werden, an denen der Sensor in der besagten Art geführt wird. Der Laser folgt dabei dem Sensor in einem seitlichen Abstand zum Anbringen der Spuren G3 bzw. G3'.

Die Figur 1H schliesslich zeigt die in Serie geschalteten Solarzellen des Moduls M, deren Struktur sich aus den in Schichten 11-13 angebrachten Spuren G1 ... G3' ergibt. Die elektrische Kopplung der einzelnen Solarzellen ist durch die zusätzlich eingetragene durchgezogene Linie verdeutlicht.

Die Figur 2 zeigt die Funktionsweise der Spurerkennung mit einer ersten erfindungsgemässen Spurführungseinheit U auf Basis eines Sensors S1 an einer diesem Sensor D1 abgewandten Spur G1. Der Sensor D1 soll dabei der Spur G1 an der Glasseite eines Moduls M folgen, die sich in die Blatttiefe hinein erstreckt. An den Positionen A, B und C gibt der Sensor D1 dabei das darunter gezeigte Signal S1 ab. Dieses Signal S1 resultiert aus der Form-, Lage-und/oder Feldstärkenänderung des elektromagnetischen oder elektrischen Feldes, welche wiederum durch die unterschiedliche im Feld befindliche Materialgeometrie, -menge und -zusammensetzung über die Positionen A-C hinweg hervorgerufen wird. Die Feldänderung bewirkt eine Bedämpfung oder Kapazitätsänderung des entsprechenden induktiven bzw. kapazitiven Sensors, dessen Signal S1 schliesslich zur Spurerkennung herangezogen wird. Vorliegend ist der Sensor D1 so ausgelegt, dass er in den seitlichen Spurbereichen, d.h. an den Positionen A und C kein Signal S1 erzeugt, während er im Bereich der Spur G1 ein Signal abgibt. Die Spurführungseinheit U ist dabei so ausgelegt, dass sie den Sensor D1 in die Position B zurückführt, sobald das Signal der Positionen A oder C anliegt.

Die Figur 3 zeigt die Funktionsweise der Spurerkennung mit einer zweiten erfindungsgemässen Spurführungseinheit auf Basis von zwei Sensoren D1 und D2 an einer den Sensoren D1 und D2 abgewandten Spur G1. Die beiden Sensoren D1 und D2 sind nebeneinander angeordnet und ebenfalls so ausgelegt, dass sie in den seitlichen Bereichen der Spur G1 kein Signal erzeugen, während sie im Bereich der Spur G1 ein Signal abgeben. Wandern die Sensoren D1 und D2 von Position A nach Position B, entsteht an der Kante der Spur G1 eine Signaldifferenz dS zwischen dem Signal S1 des Sensors D1 und einem Signal D2 des Sensors D2. Diese Differenz dS ist im Vergleich zur Betrachtung einer Signaländerung eines einzelnen Sensors besonders gut erkennbar und wird von der Spurführungseinheit ausgewertet. Liegt sie nicht mehr an, weichen die Sensoren D1 und D2 von der Spur G1 ab, d.h. befinden sich in einem seitlichen Bereich davon, wo die Signale S1 und S2 keinen Unterschied mehr aufweisen.

Sowohl bei der Spurerkennung der Figur 2 wie der Figur 3 können auch umgekehrt signalisierende Sensoren D1 bzw. D1 und D2 gewählt werden, die in den seitlichen Bereichen der Spur G1 ein Signal S1 bzw. S1 und S2 erzeugen, während im Bereich der Spur G1 kein Signal abgegeben wird. Entscheidend ist lediglich, dass eine Signaländerung bei Abweichung der Sensoren D1 und D2 von der Spur G1 auftritt, die von der Spurführungseinheit erkennbar und auswertbar ist.

Die Figur 4 zeigt die Funktionsweise der Spurerkennung mit der erfindungsgemässen Spurführungseinheit U der Figur 2 an einer dem Sensor D1 zugewandten Spur G1. Das Funktionsprinzip der Spurführungseinheit U bleibt dabei unverändert. Wesentlich ist aber, dass, gleich ob der Sensor D1 an der Glassseite oder der Strukturseite des Moduls M geführt wird, eine zuverlässige Spurerkennung und -führung möglich ist.

Die Figur 5 zeigt ein Blockschaltbild einer erfindungsgemässen Strukturierungsvorrichtung A, basierend auf der Spurerkennung der Figur 2. Die Vorrichtung A umfasst einen Sensor D1, der mit einer Spurführungseinheit U gekoppelt ist, und ein Strukturierungswerkzeug T, dessen Bewegung dem Sensor D1 in einem seitlichen Abstand d folgen soll. Die gezeigte Vorrichtung A befindet sich gerade im Prozessschritt P2, also beim Strukturieren der Absorbtionsschicht des Moduls M, die von der Glasseite aus bearbeitet wird. Die Spur G1 liegt dabei im Material des Moduls M und wird grundsätzlich gleich wie vorstehend zu Figur 2 beschrieben erkannt.

Das Strukturierungswerkzeug T ist in diesem Fall ein Laser, der von der Glassseite des Moduls M her eingesetzt wird, um dessen Strukturseite zu bearbeiten. Zur Strukturierung des Moduls M können aber auch andere Schneidwerkzeuge zum Einsatz kommen, die von der Strukturseite her auf das Modul M einwirken. Der Abstand d des Lasers zum Sensor D1 ist über die gesamte Breite des Moduls M elektromechanisch verstellbar, so dass für jeden neuen Schnitt nur eine Referenzspur benötigt wird. Eine jeweils neue Referenzspurerkennung entfällt dadurch und die Vorrichtung A muss nur einmal justiert werden. Dadurch wird die Bearbeitungszeit für ein Modul M erheblich verkürzt.

Im Vergleich zu bilderkennenden Systemen ist die erfindungsgemässe Strukturierungsvorrichtung A und das damit ausführbare Strukturierungsverfahren für Solarmodule M frei von Einflüssen des Abtragprozesses, da es auf einer induktiven und/oder kapazitiven Erkennung einer Spur an oder im Material des Moduls beruht. Es geht damit nicht nur über die bisherigen Möglichkeiten bilderkennender Systeme hinaus. Seine Unempfindlichkeit gegenüber Einflüssen des Abtragprozesses lässt es zudem offen, welche Art von Strukturierungswerkzeug T zum Einsatz kommt. Damit ist eine besonders zuverlässige und genaue Strukturierung der Module möglich, was deren Qualität und Wirkungsgrad wiederum deutlich erhöht. Gleichzeitig ist die erfindungsgemässe Vorrichtung A einfach aufgebaut und kostengünstig herstellbar, und das zugehörige Strukturierungsverfahren leicht umzusetzen.

## Patentansprüche

1. Strukturierungsvorrichtung (A) für Halbleiterschichten, mit einem Strukturierungswerkzeug (T) und einer Spurführungseinheit (U), die mit wenigstens einem kapazitiven oder induktiven Sensor (D1, D2) verbunden und derart ausgebildet ist, dass eine Abweichung des Sensors (D1, D2) von einer an der Oberfläche oder in dem Material der Schicht angebrachten Referenzspur (G1...G3') anhand seiner Signale (S1, S2) erkennbar ist, und auf Basis dieser Abweichung Steuersignale zum Führen des Strukturierungswerkzeugs (T) in einem seitlichen Abstand (d) parallel zu der Referenzspur (G1...G3') erzeugbar sind.

2. Strukturierungsvorrichtung (A) nach Anspruch 1, bei welcher der wenigstens eine Sensor (D1, D2) linear verfahrbar ist, und die Spurführungseinheit (U) ausgebildet ist, basierend auf einer Abweichung der Referenzspur (G1...G3') von einem Sensor (D1, D2) Steuersignale zum Rückführen des Strukturierungswerkzeugs (T) auf den seitlichen Abstand (d) zur Referenzspur (G1...G3') zu erzeugen.

3. Strukturierungsvorrichtung (A) nach Anspruch 2, bei welcher Sensoren (D1, D2) zum Erkennen einer Abweichung von der Referenzspur (G1...G3') in einer Linie angeordnet sind, die in einem Winkel zu deren linearer Verfahrrichtung verläuft.

4. Strukturierungsvorrichtung (A) nach Anspruch 2 oder 3, bei welcher das Strukturierungswerkzeug (T) dem wenigstens einen Sensor (D1, D2) nachgeführt ist, und die Spurführungseinheit (U) ausgebildet ist, Abweichungen von der Referenzspur (G1...G3') zu korrelieren.

5. Strukturierungsvorrichtung (A) nach Anspruch 1, bei welcher der wenigstens eine Sensor (D1, D2) in einer Ebene verfahrbar ist, wobei das Strukturierungswerkzeug (T) einer Bewegung des Sensors (D1, D2) folgt, und die Spurführungseinheit (U) ausgebildet ist, basierend auf einer Abweichung eines Sensors (D1, D2) von der Referenzspur (G1...G3') Steuersignale zum Rückführen des Sensors (D1, D2) auf diese Spur (G1...G3') zu erzeugen.

6. Strukturierungsvorrichtung (A) nach einem der vorstehenden Ansprüche, bei welcher die Spurführungseinheit (U) zudem ausgebildet ist, Signale (S1, S2) mehrerer Sensoren (D1, D2) zum Erkennen einer Abweichung von der Spur (G1...G3') zu korrelieren.

7. Strukturierungsvorrichtung (A) nach einem der vorstehenden Ansprüche, bei welcher das Strukturierungswerkzeug (T) und der wenigstens eine Sensor (D1, D2) gegenläufig zueinander ausgerichtet sind.

8. Strukturierungsvorrichtung (A) nach einem der vorstehenden Ansprüche, bei welcher der seitliche Abstand (d) zwischen dem Strukturierungswerkzeug (T) und dem wenigstens einen Sensor (D1, D2) einstellbar ist.

9. Verfahren zum Strukturieren von Halbleiterschichten, umfassend die Schritte:
Justieren wenigstens eines kapazitiven oder induktiven Sensors (D1, D2) auf eine Referenzspur (G1...G3') und Einstellen eines seitlichen Abstands (d) zwischen der Spur (G1...G3') und einem Strukturierungswerkzeug (T);
Verfahren des wenigstens einen Sensors (D1, D2) entlang der Referenzspur (G1...G3') und Erkennen einer Abweichung des wenigstens einen Sensors (D1, D2) von der Spur (G1...G3'), und
Führen des Strukturierungswerkzeugs (T) in einem seitlichen Abstand (d) parallel zu der Referenzspur (G1...G3') unter Heranziehen der Abweichung.

10. Verfahren nach Anspruch 9, bei welchem der wenigstens eine Sensor (D1, D2) linear verfahren und das Strukturierungswerkzeug (T) auf den eingestellten seitlichen Abstand (d) von der Referenzspur (G1...G3') rückgeführt wird.

11. Verfahren nach Anspruch 9 oder 10, bei welchem der wenigstens eine Sensor (D1, D2) auf die Referenzspur (G1...G3') rückgeführt wird, und das Strukturierungswerkzeug (T) der Bewegung des wenigstens einen Sensors (D1, D2) folgt.

12. Verfahren nach Anspruch 9 bis 11, bei welchem das Strukturierungswerkzeug (T) dem Sensor (D1, D2) nachgeführt wird, und bei welchem Signale des wenigstens einen Sensors (D1, D2) zum Führen des Strukturierungswerkzeugs (T) miteinander korreliert werden.

13. Verfahren nach Anspruch 9 bis 12, bei welchem Signale (S1, S2) mehrerer Sensoren (D1, D2) zum Erkennen einer Abweichung von der Spur (G1...G3') räumlich miteinander korreliert werden.

14. Verwendung einer Strukturierungsvorrichtung nach einem der Ansprüche 1 bis 8 zur Herstellung einer P1-, P2- und P3-Schicht von Solarmodulen (M).

## Claims

1. A structuring device (A) for semiconductor layers, with a structuring tool (T) and a track guiding unit (U), which is connected to at least one capacitive or inductive sensor (D1, D2) and is constructed in such a manner that a deviation of the sensor (D1, D2) from a reference track (G1...G3') applied on the surface or in the material of the layer can be detected on the basis of the signals (S1, S2) thereof, and control signals for guiding the structuring tool (T) at a lateral distance (d) parallel to the reference track (G1...G3') can be generated on the basis of this deviation.

2. The structuring device (A) according to Claim 1, in which the at least one sensor is linearly displaceable (D1, D2) and the track guiding unit (U) is constructed to generate control signals for returning the structuring tool (T) to the lateral distance (d) to the reference track (G1...G3') based on a deviation of the reference track (G1...G3') from a sensor (D1, D2).

3. The structuring device (A) according to Claim 2, in which sensors (D1, D2) for detecting a deviation from the reference track (G1...G3') are arranged in a line which runs at an angle to the linear travel direction thereof.

4. The structuring device (A) according to Claim 2 or 3, in which the structuring tool (T) is tracked to the at least one sensor (D1, D2) and the track guiding unit (U) is constructed to correlate deviations from the reference track (G1...G3').

5. The structuring device (A) according to Claim 1, in which the at least one sensor (D1, D2) is displaceable in a plane, wherein the structuring tool (T) follows a movement of the sensor (D1, D2), and the track guiding unit (U) is constructed to generate control signals for returning a sensor (D1, D2) to the reference track (G1...G3') based on a deviation of the sensor (D1, D2) from this track (G1...G3').

6. The structuring device (A) according to one of the preceding claims, in which the track guiding unit (U) is additionally constructed to correlate signals (S1, S2) of a plurality of sensors (D1, D2) for detecting a deviation from the track (G1...G3').

7. The structuring device (A) according to one of the preceding claims, in which the structuring tool (T) and the at least one sensor (D1, D2) are orientated counter to one another.

8. The structuring device (A) according to one of the preceding claims, in which the lateral distance (d) between the structuring tool (T) and the at least one sensor (D1, D2) can be set.

9. A method for structuring semiconductor layers, comprising the steps:
adjusting at least one capacitive or inductive sensor (D1, D2) to a reference track (G1...G3') and setting a lateral distance (d) between the track (G1...G3') and a structuring tool (T);
moving the at least one sensor (D1, D2) along the reference track (G1...G3') and detecting a deviation of the at least one sensor (D1, D2) from the track (G1...G3'), and
guiding the structuring tool (T) at a lateral distance (d) parallel to the reference track (G1...G3') calling upon the deviation.

10. The method according to Claim 9, in which the at least one sensor (D1, D2) is moved linearly and the structuring tool (T) is returned to the set lateral distance (d) from the reference track (G1...G3').

11. The method according to Claim 9 or 10, in which the at least one sensor (D1, D2) is returned to the reference track (G1...G3') and the structuring tool (T) follows the movement of the at least one sensor (D1, D2) .

12. The method according to Claim 9 to 11, in which the structuring tool (T) is tracked to the sensor (D1, D2) and in which signals of the at least one sensor (D1, D2) are correlated with one another for guiding the structuring tool (T).

13. The method according to Claim 9 to 12, in which signals (S1, S2) of a plurality of sensors (D1, D2) are spatially correlated with one another for detecting a deviation from the track (G1...G3').

14. A use of a structuring device according to one of Claims 1 to 8 for producing a P1, P2 and P3 layer of solar modules (M).

## Revendications

1. Dispositif de structuration (A) pour couches semiconductrices avec un outil de structuration (T) et une unité de guidage de piste (U) qui est reliée avec au moins un capteur (D1, D2) capacitif ou inductif et conçue de telle sorte qu'un écart du capteur (D1, D2) d'une piste de référence (G1...G3') disposée à la surface ou dans le matériau de la couche peut être identifié à l'aide de ses signaux (S1, S2) et que sur la base de cet écart des signaux de commande peuvent être générés parallèlement à la piste de référence (G1...G3') pour guider l'outil de structuration (T) dans un intervalle latéral (d).

2. Dispositif de structuration (A) selon la revendication 1 pour lequel le au moins un capteur (D1, D2) peut être déplacé de façon linéaire et l'unité de guidage de piste (U) est conçue pour générer des signaux de commande à partir d'un capteur (D1, D2) en se basant sur un écart de la piste de référence (G1...G3') pour faire revenir l'outil de structuration (T) sur l'intervalle (d) latérale vers la piste de référence (G1....G3').

3. Dispositif de structuration (A) selon la revendication 3 pour lequel des capteurs (D1, D2) pour identifier un écart de la piste de référence (G1...G3') sont disposés sur une ligne qui passe dans un angle en rapport avec leur direction de déplacement linéaire.

4. Dispositif de structuration (A) selon la revendication 2 ou 3 pour lequel l'outil de structuration (T) est asservi à au moins un capteur (D1, D2) et l'unité de guidage de piste (U) est conçue pour mettre en corrélation les écarts de la piste de référence (G1...G3').

5. Dispositif de structuration (A) selon la revendication 1 pour lequel le au moins un capteur (D1, D2) peut être déplacé dans un plan, l'outil de structuration (T) suivant un mouvement du capteur (D1, D2) et l'unité de guidage de piste (U) étant conçue pour générer des signaux de commande pour faire revenir le capteur (D1, D2) sur cette piste (G1...G3') en se basant sur un écart d'un capteur (D1, D2) de la piste de référence (G1...G3') .

6. Dispositif de structuration (A) selon une des revendications précédentes pour lequel l'unité de guidage de piste (U) est conçue en outre pour mettre en corrélation des signaux (S1, S2) de plusieurs capteurs (D1, D2) pour identifier un écart de la piste (G1...G3').

7. Dispositif de structuration (A) selon une des revendications précédentes pour lequel l'outil de structuration (T) et le au moins un capteur (D1, D2) sont orientés dans le sens opposé l'un par rapport à l'autre.

8. Dispositif de structuration (A) selon une des revendications précédentes pour lequel l'intervalle latéral (d) entre l'outil de structuration (T) et le au moins un capteur (D1, D2) peut être ajusté.

9. Procédé de structuration de couches semiconductrices comprenant les phases:
Ajustage d'au moins un capteur capacitif ou inductif (D1, D2) sur une piste de référence (G1...G3') et réglage d'un intervalle latéral (d) entre la piste (G1...G3') et un outil de structuration (T),
déplacement de au moins un capteur (D1, D2) le long de la piste de référence (G1...G3') et identification d'un écart de au moins un capteur (D1, D2) de la piste (G1...G3'),
guidage de l'outil de structuration (T) dans un intervalle latéral (d) parallèlement à la piste de référence (G1...G3') en se servant de l'écart.

10. Procédé selon la revendication 9 pour lequel le au moins un capteur (D1, D2) est déplacé de façon linéaire et l'outil de structuration (T) est ramené sur l'intervalle (d) latéral réglé de la piste de référence (G1...G3').

11. Procédé selon la revendication 9 ou 10 pour lequel le au moins un capteur (D1, D2) est ramené sur la piste de référence (G1...G3') et l'outil de structuration suit le mouvement de au moins un capteur (D1, D2).

12. Procédé selon la revendication 9 à 11 pour lequel l'outil de structuration (T) est asservi au capteur (D1, D2) et pour lequel des signaux d'au moins un capteur (D1, D2) sont mis en corrélation entre eux pour guider l'outil de structuration (T).

13. Procédé selon la revendication 9 à 12 pour lequel des signaux (S1, S2) de plusieurs capteurs (D1, D2) sont mis en corrélation entre eux dans l'espace pour identifier un écart de la piste (G1...G3').

14. Utilisation d'un dispositif de structuration selon une des revendications 1 à 8 pour fabriquer une couche P1, P2- et P3 de modules solaires (M).
